# EUROPEAN PATENT SPECIFICATION

(11) **EP 1 607 595 B1**
(45) Date of publication and mention of the grant of the patent: **02.11.2006**
(21) Application number: 04102729.3
(22) Date of filing: 15.06.2004
(51) Int. Cl.: F01N 3/023, F01N 9/00

(54) **An exhaust system for a turbocharged diesel engine**
Ein Abgassystem für einen Dieselmotor
Un système d'échappement pour un moteur diesel suralimenté

(43) Date of publication of application: 21.12.2005
(73) Proprietor: Delphi Technologies, Inc., Troy, MI 48007 (US)
(72) Inventor: Spadafora, Peter, 3350, Leudelange (LU); Michel, Eric, 6792, Aix-sur-Cloie (BE); Mathias, Eric, 5760 Hassel (LU); Ghezzi, Olivier, 57330, Hettange-Grande (FR)
(74) Representative: Beissel, Jean

(56) References cited:
- EP-A- 1 072 764
- EP-A- 1 273 779
- EP-A- 1 369 557
- DE-A1- 10 241 063
- US-A1- 2003 209 011

## Description

### FIELD OF THE INVENTION

The present invention generally relates to turbocharged diesel cycle internal combustion engines and more particularly to their exhaust gas line.

### BACKGROUND OF THE INVENTION

Recent turbocharged diesel internal combustion engines aim for the best possible overall efficiency while at the same time respecting the required emission limits. Internal combustion engines tend to use more or less the same technical solutions based on well-known and economical components to achieve these requirements. A state of the art turbocharged and low emission internal combustion engine is e.g. disclosed in EP 1 273 779. The disclosed internal combustion engine has all necessary components to meet nowadays' economical and environmental requirements.

There is provided a fully electronically controlled engine operation system comprising multiple sensors - including an exhaust pressure sensor and an exhaust temperature sensor - and actuators, a precise and highly adaptive high pressure fuel metering system, a variable nozzle turbocharger, an exhaust gas-recirculation (EGR) valve, an oxidation catalytic converter, also referred to as oxidation catalyst, and a diesel particulate filter. The exhaust gas produced by the engine flows through the turbine stage of the turbocharger, the oxidation catalyst and finally the diesel particulate filter.

A certain amount of exhaust gas is derived towards the EGR valve from upstream of the turbocharger. The EGR valve meters the derived exhaust gas in order to reintroduce the latter in certain amounts in the combustion chambers of the engine, which results in lowering its polluting emissions. These working principles of the exhaust side of the engine are used throughout the whole engine industry with some improvements when adding e.g. an recycled exhaust gas cooler (EGR cooler) and/or an turbocharger intercooler and/or an catalysed diesel particulate filter (CDPF).

Although this configuration shows remarkable performances, it is not free of drawbacks. The thermodynamics of adding restrictions after the turbocharger reduces the performance of the engine in terms of fuel consumption, maximum power and torque response. The variable restriction caused by the diesel particulate filter also makes the control of the turbocharger problematic as the turbocharger control changes dramatically with increased downstream turbocharger pressure. When equipped with a diesel particulate filter, a fuel borne additive management system or CDPF must be used in order to be able to regenerate the diesel particulate filter. This adds cost and complexity to the after treatment, not to mention the hassle and cost of having to periodically refill the additive reservoir. The size and weight of all the components of the additive management system also make the vehicle packaging difficult.

### OBJECT OF THE INVENTION

The object of the present invention is to provide an improved exhaust gas line of a turbocharged diesel cycle internal combustion engine and a method for cleaning exhaust gas of a turbocharged diesel cycle internal combustion engine. This object is achieved by an exhaust gas line as claimed in claim 1 and a method for cleaning exhaust gas as claimed in claim 10.

### SUMMARY OF THE INVENTION

According to the present invention, an exhaust gas line of a turbocharged diesel cycle internal combustion engine comprises an exhaust gas outlet; a connection for feeding exhaust gas to an exhaust gas recirculation (EGR) device; a turbocharger with an inlet and an outlet, the turbocharger comprising electrically assisted means; a catalysed diesel particulate filter (CDPF) with an inlet and an outlet; and means for determining the contamination state of the catalysed diesel particulate filter. The exhaust gas outlet, the catalysed diesel particulate filter, the connection to the exhaust gas recirculation device and the turbocharger are connected in series in this order with their respective outlet connected to the respective next inlet. The connection to the EGR device is located between the outlet of the CDPF and the inlet of the turbocharger.

This architecture of an exhaust gas line is of lower cost and complexity than the classical exhaust gas line that can be found in any modern turbocharged diesel engine. The main factor is that the exhaust temperature and the exhaust gas flow are more important upstream of the turbocharger. The turbocharger physics are such that it removes energy from the exhaust gas stream, which lowers the exhaust gas temperature by about 100 K. By placing the CDPF upstream of the turbocharger, the temperature of the exhaust gas flowing through the CDPF is higher and there is no need to provide a separate additive management system for cleaning the CDPF. This is due to the fact that, at this location, the exhaust gas reaches the ignition temperature of the soot particulates in a majority of speed-load points. The hotter location of the CDPF also promotes the efficiency in terms of unburned hydrocarbons (HC) and carbon monoxide (CO) conversion rate. Furthermore, from a cost perspective, the higher efficiency leads to the possibility of using less precious metal in the converters, thus designing cheaper converters. The engine performance is also improved by the present invention. The thermodynamics of having a restriction upstream of the turbocharger instead of downstream are significant for the torque and the fuel consumption. The variable restriction of the CDPF upstream of the turbocharger sets the passage downstream of the turbocharger always close to atmospheric pressure. The engine's performance is thus increased since the latter and especially the turbocharger are much more sensitive to a variation in downstream pressure. The combination of turbocharger with electrically controlled means and CDPF also allows a better transient response of the engine in terms of torque as the injected fuel amount can be increased without any concern for the soot output. This however also means that a transient response comparable to that obtained with known systems can be achieved with less effort. Indeed, the present system needs less energy to achieve the same transient response as achieved by other prior art systems. Instead of using a 42V power source for the electrically controlled means of the turbocharger, a 12V power source can be used. It follows that the electrically controlled means of the turbocharger can be powered by a standard vehicle power source, which in turn leads to lower manufacturing and maintenance costs. Without electrically assisted means, the invention would not work well, as the turbo lag would be lengthened unacceptably because the filter has a large thermal time constant, which means that it has to be heated before it works. Finally, the durability of both turbocharger and EGR valve are increased because the soot cleaning action of the CDPF avoids their soot contamination.

Preferably an intercooler is arranged between the CDPF and the air inlet of the engine. The intercooler allows to achieve a more homogeneous mixture to reach the engine and to further cool the mixture before it is delivered to the engine. Traditionally, an intercooler is arranged upstream of the intake manifold such that only fresh air passes through the intercooler. Because, according to the present invention, the exhaust gas coming from the CDPF is free of soot, the recycled exhaust gas is clean and can also be redirected through the intercooler.

The means for determining the contamination state of the catalysed diesel particulate filter preferably comprises a first pressure sensor upstream of the catalysed diesel particulate filter; a second pressure sensor downstream of the catalysed diesel particulate filter; and an electronic control module receiving signals from the first and second pressure sensors and determining, based on the received signals, the contamination state of the catalysed diesel particulate filter. Pressure sensors allow easy and reliable measurement of the restriction of the CDPF and hence of the amount of soot particulates trapped therein. Although two separate pressure sensors are preferred, it is not excluded to provide a differential pressure sensor instead.

Advantageously, the first pressure sensor is located in proximity of the inlet of the catalysed diesel particulate filter and the second pressure sensor is located in proximity of the outlet of the catalysed diesel particulate filter. As a result of the pressure sensors only being separated by the CDPF, the measured pressure difference takes into account only the pressure drop across the CDPF, thereby providing a precise determination of the pressure difference across the CDPF and of the amount of soot particulates trapped therein.

The exhaust gas line can further comprise a temperature sensor downstream of the catalysed diesel particulate filter. Advantageously, the temperature sensor is located in proximity of the outlet of the catalysed diesel particulate filter. The temperature sensor can be used to monitor the temperature of the exhaust gas through the CDPF. The temperature sensor protects the whole installation against overheating. If a critical temperature is reached during the operation of the engine in a particular operating mode, the safety of the whole installation has priority and the engine is switched into an operating mode wherein the exhaust gas temperature is lowered. Preferably, two separate temperature sensors are used, one upstream and one downstream of the CDFP, thereby eliminating the need to model the temperature difference across the CDPF.

The exhaust gas line can further comprise an oxidation catalyst between the engine and the catalysed diesel particulate filter. Such an oxidation catalyst can promote the production of NO upstream of the CDPF, which in turn promotes improved soot burning in the CDPF and hence an improved regeneration of the latter. An oxidation catalyst can also be arranged downstream of the turbocharger, thereby allowing to further clean the exhaust gas delivered to atmosphere.

The present invention also concerns a method for cleaning exhaust gas of a turbocharged diesel cycle internal combustion engine having a turbocharger comprising electrically assisted means. The method comprises the following steps of:
a) directing the exhaust gas through a catalysed diesel particulate filter;
b) splitting the exhaust gas stream into two parts, a first part thereof being directed from a location downstream of the catalysed diesel particulate filter to an exhaust gas recirculation device, a second part of the exhaust gas being directed through a turbocharger;
c) determining the contamination state of the catalysed diesel particulate filter; and
d) depending on the determined contamination state of the catalysed diesel particulate filter, operating the engine in a first operating mode, or in a second operating mode wherein a temperature of the exhaust gas is increased in order to burn soot particulates trapped in the catalysed diesel particulate filter.

An important aspect of the present method is the surveillance of the CDPF. In most situations, the engine is operated in the first operating mode according to the operator's demand. The potential soot clogging risk of the CDPF is taken into account. If it is detected that the amount of soot particulates in the CDPF has reached a predetermined level, the engine is operated in the second operating mode. The second operating mode results in the control of the engine in such a way that the temperature of the exhaust gas through the CDPF is increased, which leads to the burning of the soot particulates trapped in the CDPF. The CDPF is thereby regenerated.

The step of determining the contamination state of the catalysed diesel particulate filter advantageously comprises the steps of measuring a first pressure of the exhaust gas upstream of the catalysed diesel particulate filter by means of a first pressure sensor and a second pressure of the exhaust gas downstream of the catalysed diesel particulate filter by means of a second pressure sensor; and calculating an exhaust gas pressure difference across the catalysed diesel particulate filter based on the measured first and second pressures.

Preferably, when the exhaust gas pressure difference is below a predetermined pressure threshold, the engine is operated in the first operating mode, and, when the exhaust gas pressure difference is above the predetermined pressure threshold, the engine is operated in the second operating mode.

The engine can be operated in the second operating mode for a predetermined maximum amount of time, the engine being thereafter switched into the first operating mode. The predetermined maximum amount of time is preferably set to an empirical value based on experiments with the CDPF. Such experiments result in the determination of the maximum duration of the second operating mode in order to ensure that all the soot particulates in the CDPF are burnt, even in a worst-case situation.

The method preferably comprises the step of measuring a temperature of the exhaust gas downstream of the catalysed diesel particulate filter. The engine can then be operated in the second operating mode for less than a predetermined maximum amount of time, wherein the engine is switched into the first operating mode when the measured temperature reaches a predetermined temperature threshold before the predetermined maximum amount of time is elapsed. The temperature sensor protects the whole installation against overheating. If a critical temperature is reached during the operation of the engine in the second operating mode, the safety of the whole installation has priority and the second mode of operating the engine is stopped, so as to switch back into the first operating mode. To prevent repetitive and rapid oscillations between the first and second operating modes, a temperature shift can be used to introduce some hysteresis in the control scheme. Thus the second operating mode is restarted at a second temperature threshold for as long as the CDPF regeneration process is foreseen to last (e.g. predetermined maximum amount of time). The second temperature threshold can e.g. be chosen to be about 20ºC lower than the other temperature threshold.

The engine can be operated in the second operating mode for less than a predetermined maximum amount of time, wherein the engine is switched into the first operating mode when the exhaust gas pressure difference falls below the predetermined pressure threshold before the predetermined maximum amount of time is elapsed. For keeping the second mode of operating the engine to last just as long as needed to regenerate the CDPF, the pressure difference across the CDPF is monitored. When this difference is small enough to consider the CDPF as regenerated, the control of the engine is switched from the second operating mode to the first operating mode.

In the second operating mode, the temperature of the exhaust gas is preferably increased by increasing exhaust gas recirculation flow; and/or by decreasing boost pressure request; and/or by increasing injected fuel quantity; and/or by delaying injection timing.

By increasing exhaust gas recirculation flow, the air to fuel ratio is decreased. By adding exhaust gas to the intake air, the air to fuel ratio for a given volume of intake air is unbalanced such that there is not enough fresh air to completely burn the fuel in the combustion chamber of the engine. The excessive fuel is burnt in the CDPF, leading to a temperature rise in the latter, which will burn the soot particulates trapped in the CDPF.

Decreasing the boost pressure request lessens the amount of intake air provided by the compressor stage of the turbocharger. By conserving the same amount of injected fuel, the air to fuel ratio for a given volume of intake air is richer, which leads to an increase of the exhaust gas temperature, and hence of the temperature in the CDPF, whereby soot particulates trapped in the CDPF are burnt.

By increasing injected fuel quantity, the air to fuel ratio is decreased. The air to fuel ratio is unbalanced by an increase of fuel whereas the intake air quantity remains unchanged. As above, the excessive fuel is burnt in the CDPF, leading to a temperature rise in the latter, which will burn the soot particulates trapped in the CDPF. The increased injected fuel quantity can be at least partly delivered late in the injection cycle. In this way, the injected fuel portion, which is no more involved in the combustion process, remains in the exhaust gas. This injection strategy can be used with split injection when the total fuel amount to be injected is provided over several injections shots (i.e. partial load). As above, the remaining fuel is burnt once in the CDPF, leading to a temperature rise in the latter, which will burn the soot particulates trapped in the CDPF.

Delaying injection timing causes late combustion. This injection strategy can be used when the total fuel amount to be injected is provided mainly over one single injection shot (i.e. heavy load). As above, the remaining fuel is burnt in the CDPF, leading to a temperature rise in the latter, which will burn the soot particulates trapped in the CDPF.

The method can comprise the further step of directing the exhaust gas through an oxidation catalyst before reaching the catalysed diesel particulate filter. The regeneration of the CDPF is thereby improved due to the production of NO in the oxidation catalyst, which helps to burn the soot particles in the CDPF. By additionally directing the exhaust gas through such an oxidation catalyst downstream of the turbocharger, the exhaust gas can be further cleaned, thereby ensuring that fewer soot particulates reach the atmosphere.

### BRIEF DESCRIPTION OF THE DRAWINGS

The present invention will now be described, by way of example, with reference to the accompanying drawing, which is a schematic view of a turbocharged diesel engine and its exhaust gas line according to a preferred embodiment of the present invention.

### DETAILED DESCRIPTION OF A PREFERRED EMBODIMENT

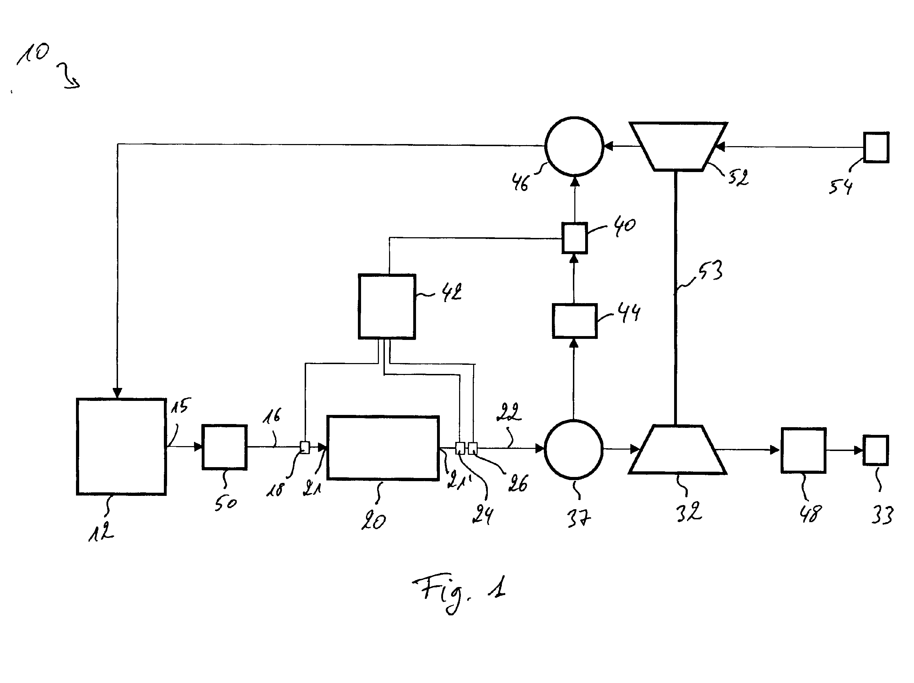

A turbocharged diesel engine 10 according to the present invention is represented on Fig. 1. All ancillary components of an engine block 12, which are not relevant for the understanding of the present invention, have been omitted so as not to overload the drawing. The exhaust gas, which is leaving the engine block 12 via an exhaust gas outlet 15, is guided through a first pipe 16 equipped with a first pressure sensor 18 for measuring a pressure P1 of the exhaust gas. A CDPF 20 having an inlet 21 and an outlet 21' is connected to the first pipe 16. The exhaust gas leaving the CDPF 20 is guided through a second pipe 22 equipped with a second pressure sensor 24 for measuring a pressure P2 and a temperature sensor 26 for measuring a temperature T2 of the exhaust gas downstream of the CDPF 20. An electric turbine stage of a turbocharger 32 is connected to the second pipe 22. The exhaust gas leaving the turbocharger 32 is finally guided to the atmosphere via a system outlet 33. The second pipe 22 comprises an exhaust manifold 37, wherein the exhaust gas can be split into two separate gas streams. A recirculation line 36 is connected to the exhaust manifold 37 and removes a variable quantity of recirculation exhaust gas of the exhaust gas metered by an EGR valve 40. The EGR valve 40 is controlled by an electronic control module 42 (ECM), which has the task to control the operation of the engine 10. The variable quantity of recirculation exhaust gas is cooled in an EGR cooler 44 prior to being re-injected into the intake manifold 46 of the engine block 12, and preferably prior to flowing through the EGR valve 40. The EGR cooler 44 is not essential for the purpose of the present invention and can be a water cooler, which can be e.g. formed in the cylinder head of the engine block 12.

An oxidation catalyst 48 located downstream of the turbocharger 32 improves the clean-up of HC as well as CO. Another oxidation catalyst 50 can also be located upstream of the CDPF 20 for an improved soot regeneration in the CDPF 20. Placing the CDPF 20 upstream of the EGR valve 40 benefits the system in two ways. First, the soot generated by the combustion of the diesel fuel does not contaminate the EGR valve 40 and/or the EGR cooler 44 and/or intake valves (not shown), thereby improving the durability of these components and also engine performance. Moreover a higher exhaust gas quantity will flow through the CDPF 20, thus increasing the regeneration speed of the CDPF 20 as well as improving the HC and CO reduction. Signals from the first and second pressure sensors 18, 24, as well as the temperature sensor 26, are fed to the ECM 42 and are used to determine the pressure drop (P2-P1) across the CDPF 20 and the temperature (T2) of the exhaust gas downstream of the CDPF. The pressure drop across the CDPF 20 reflects the amount of soot particulates trapped in the CDPF 20 and provides the information on whether an intrusive regeneration of the CDPF 20 needs to be performed or not. A predetermined pressure threshold is set in the ECM 42. This threshold is based on the speed and the load (or the RPM of the engine and the requested torque in torque demand based control strategies) and when this threshold is exceeded, the ECM 42 initiates the regeneration of the CDPF 20. Upon the regeneration request, the ECM 42 will force the exhaust gas temperature measured by the temperature sensor 26 to increase by one or a combination of the following strategies:
- Decreasing the air to fuel (A/F) ratio by increasing the variable quantity of recirculation exhaust gas derived from the exhaust gas. This is obtained by the ECM 42, which controls the EGR valve 40 so as to increase the quantity of recirculation exhaust gas of the exhaust gas flowing through the recirculation line 36. Since the exhaust gas does not contain as much oxygen as the same air volume, it will change the A/F ratio towards a richer mixture. Unburned fuel in the exhaust line resulting from the richer mixture which will then be present in the exhaust gas will burn in the CDPF 20 thus increasing its temperature, leading to the combustion of the soot particulates trapped in it.
- Decreasing the boost pressure request of the turbocharger 32. This is obtained by the ECM 42, which controls at least one air metering actuator so as to obtain less air volume to penetrate the engine, though still injecting an unchanged fuel quantity, hence changing the A/F ratio towards a richer mixture. The air metering actuator can be e.g. a nozzle of a variable geometry turbo or a manifold vacuum regulation valve (MVRV).
- Decreasing the A/F ratio by increasing the injected fuel amount. To avoid uncomfortable torque variations for the driver and the passengers, the difference in injected fuel can be injected late in the injection cycle frame with a separated injection event leading to a post injection. This shifts the A/F ratio towards a richer mixture.
- Delaying the injection-timing later in the injection cycle frame, which causes a late combustion and a higher exhaust gas temperature. With a late combustion, less released energy is used for work to produce torque, leading thus to a higher exhaust gas temperature gradient in the CDPF 20.

The temperature sensor 26 is also used to close the loop in the regeneration process. To achieve this, a control scheme is used, wherein the temperature (T2) measured by the temperature sensor 26 is compared to a first temperature threshold that can be calibrated, e.g. 750ºC. If the measured temperature is lower, then the regeneration process can go on as long as the pressure drop in the CDPF is higher than a given value or as long as the regeneration process has not lasted a predetermined maximum amount of time. The given time value is determined experimentally by measuring how long the high temperature exhaust gas needs to flow through a CDPF before e.g. 95% of the soot particulates are burned or the pressure drop is lower than 5% of the maximum permissible pressure drop across the CDPF. If the measured temperature is higher than the first temperature threshold that can be calibrated then the regeneration process is discontinued. This is obtained by returning towards a stoichiometric A/F ratio to use up oxygen in the engine combustion and cool the regeneration process. The control scheme can have a hysteresis type behaviour to prevent rapid changes between the regeneration and the non-regeneration state. The offset caused by the hysteresis can be of e.g. 20ºC, i.e. stopping, in this case, the regeneration process when the exhaust gas temperature is at 750ºC and re-starting it when the latter has reached 730ºC. The exhaust gas first temperature threshold (i.e. 750ºC) is determined in order to protect the turbocharger 32 from damages and increase the durability thereof. Whenever the actual boost pressure of the turbocharger 32 is less than the desired boost pressure, the ECM 42 starts a post injection.

It has to be noted that the above architecture and the control strategy results in both greater exhaust gas temperature and flow. By removing energy from the exhaust gas, the temperature drop of the latter in the turbocharger 32, is of about 100 K. By placing the CDPF 20 upstream of the turbocharger, the CDPF reaches a higher temperature. This effect can be used to suppress a fuel borne additive management system, if so equipped since the fuel borne additive is only used to lower the ignition temperature of soot particulates by about 100 K in order to be able to regenerate the CDPF 20 by burning the soot particulates.

A further advantage of the present invention is that the exhaust gas derived by the EGR valve 40 is mostly free of soot particulates as the exhaust gas is taken downstream the CDPF 20. Compared with usual exhaust gas line architectures where the EGR valve derives exhaust gas upstream of the CDPF, the downstream derivation leads the CDPF 20 to be flowed with higher amounts of exhaust gas flow. This reinforces the oxygen and heat path across the CDPF 20. Besides the higher efficiency of the emission control system, the suppression of the fuel borne additive management system lowers the cost and the complexity of the engine 10. The location of the CDPF 20 and the oxidation catalyst 28 in the hotter parts of the exhaust line, which leads to the above-mentioned higher efficiency (i.e. more HC and CO transformed), also has a benefit on the cost of these components as less precious metals may be used. The precious metals used in these components are the major cost factor in the manufacturing price of a catalytic converter. The suppression of e.g. only 5% of precious metals drops the price of the system substantially.

From the thermodynamic point of view, it is much more interesting to have the restriction caused by both CDPF 20 upstream of the turbocharger 32. In this configuration, the thermodynamics are significant to both torque and fuel consumption. As the variable restriction is upstream the turbocharger 32, the exhaust gas in the downstream passage always has a pressure near to atmospheric pressure. This benefits the behaviour of the turbocharger 32 as the latter is far more sensitive to the downstream pressure.

The electrically assisted turbocharger 32 and CDPF 20 combination allows a better transient response of the torque of the engine 10 since the fuel-injected quantities can be increased without soot concern.

It will be appreciated that the turbocharger 32 is generally linked to a compressor 52 via a mechanical link 53. The compressor 52 feeds air from atmosphere via a system inlet 54 to the intake manifold 46

It will also be appreciated that the turbocharger comprising electrically assisted means can be an electrically assisted turbocharger or a turbocharger mechanically linked to an electrically assisted compressor.

## Claims

1. An exhaust gas line of a turbocharged diesel cycle internal combustion engine (10), said exhaust gas line comprising:
- an exhaust gas outlet (15);
- a connection for feeding exhaust gas to an exhaust gas recirculation line (36);
- a turbocharger (32) comprising electrically assisted means;
- a catalysed diesel particulate filter (20) with an inlet (21) and an outlet (21'); and
- means for determining the contamination state of said catalysed diesel particulate filter (20),
wherein
said exhaust gas outlet (15), said catalysed diesel particulate filter (20), said connection to said exhaust gas recirculation line (36) and said turbocharger (32) are connected in series in this order.

2. The exhaust gas line according to claim 1, wherein said means for determining the contamination state of said catalysed diesel particulate filter (20) comprises
- a first pressure sensor (18) upstream of said catalysed diesel particulate filter (20);
- a second pressure sensor (24) downstream of said catalysed diesel particulate filter (20);
- an electronic control module (42) receiving signals from said first and second pressure sensors (18, 24) and determining, based on the received signals, the contamination state of said catalysed diesel particulate filter (20).

3. The exhaust gas line according to claim 2,
wherein said first pressure sensor (18) is located in proximity of said inlet (21) of said catalysed diesel particulate filter (20); and
wherein said second pressure sensor (24) is located in proximity of said outlet (21') of said catalysed diesel particulate filter (20).

4. The exhaust gas line according to claim 2 or 3, further comprising a temperature sensor (26) downstream of said catalysed diesel particulate filter (20).

5. The exhaust gas line according to any one of claims 1 to 4, further comprising an oxidation catalyst (50) between said exhaust gas outlet (15) and said catalysed diesel particulate filter (20).

6. The exhaust gas line according to any one of claims 1 to 5, wherein said turbocharger comprising electrically assisted means is an electrically assisted turbocharger.

7. The exhaust gas line according to any one of claims 1 to 5, wherein said turbocharger comprising electrically assisted means is a turbocharger mechanically linked to an electrically assisted compressor.

8. The exhaust gas line according to any one of the previous claims, wherein said electrically assisted means of said turbocharger (32) is powered by a 12V power source.

9. The exhaust gas line according to any one of the previous claims, wherein an intercooler is arranged between said catalysed diesel particulate filter (20) and an air inlet of the engine (12).

10. A method for cleaning exhaust gas of a turbocharged diesel cycle internal combustion engine (10) having a turbocharger (32) comprising electrically assisted means, said method comprising the steps of:
(a) directing said exhaust gas through a catalysed diesel particulate filter (20);
(b) splitting said exhaust gas stream into two parts, a first part thereof being directed from a location downstream of said catalysed diesel particulate filter (20) to an exhaust gas recirculation line (36), a second part of said exhaust gas being directed through a turbocharger (32);
(c) determining the contamination state of said catalysed diesel particulate filter (20); and
(d) depending on the determined contamination state of said catalysed diesel particulate filter (20), operating said engine (10)
in first operating mode, or
in a second operating mode, wherein a temperature of said exhaust gas is increased in order to burn soot particulates trapped in said catalysed diesel particulate filter (20).

11. The method according to claim 10, wherein said step of determining the contamination state of said catalysed diesel particulate filter (20) comprises the steps of:
measuring a first pressure of said exhaust gas upstream of said catalysed diesel particulate filter (20) and a second pressure of said exhaust gas downstream of said catalysed diesel particulate filter (20); and
calculating an exhaust gas pressure difference across said catalysed diesel particulate filter (20) based on said measured first and second pressures.

12. The method according to claim 11, wherein,
when said exhaust gas pressure difference is below a predetermined pressure threshold, said engine is operated in said first operating mode, and,
when said exhaust gas pressure difference is above a predetermined pressure threshold, said engine is operated in said second operating mode.

13. The method according to any one of claims 10 to 12, wherein said engine is operated in said second operating mode for a predetermined maximum amount of time, said engine being thereafter switched into said first operating mode.

14. The method according to any one of claims 10 to 13, comprising the step of measuring a temperature of said exhaust gas downstream of said catalysed diesel particulate filter (20),
wherein said engine is operated in said second operating mode for less than a predetermined maximum amount of time, wherein said engine is switched into said first operating mode when said measured temperature reaches a predetermined temperature threshold before said predetermined maximum amount of time is elapsed.

15. The method according to any one of claims 10 to 14, wherein said engine is operated in said second operating mode for less than a predetermined maximum amount of time, wherein said engine is switched into said first operating mode when said exhaust gas pressure difference falls below said predetermined pressure threshold before said predetermined maximum amount of time is elapsed.

16. The method according to any one of claims 10 to 15, wherein, in said second operating mode, said temperature of said exhaust gas is increased
by increasing exhaust gas recirculation flow; and/or
by decreasing boost pressure request; and/or
by increasing injected fuel quantity; and/or
by delaying injection timing.

17. The method according to any one of claims 10 to 17, further comprising the step of directing said exhaust gas coming from said engine (12) through an oxidation catalyst (50) before feeding it to said catalysed diesel particulate filter (20).

## Patentansprüche

1. Abgasleitung eines turboaufgeladenen Dieselmotors (10), wobei die Abgasleitung umfasst:
- einen Abgasauslass (15);
- eine Verbindung, um Abgas einer Abgasrückführungsleitung (36) zuzuführen;
- einen Turbolader (32), der ein elektrisch unterstütztes Mittel umfasst;
- einen katalytischen Dieselpartikelfilter (20) mit einem Einlass (21) und einem Auslass (21'); und
- ein Mittel zur Bestimmung des Verunreinigungszustands des katalytischen Dieselpartikelfilters (20),
wobei
der Abgasauslass (15), der katalytische Dieselpartikelfilter (20), die Verbindung mit der Abgasrückführungsleitung (36) und der Turbolader (32) in dieser Reihenfolge hintereinander angeschlossen sind.

2. Abgasleitung nach Anspruch 1, wobei das Mittel zur Bestimmung des Verunreinigungszustands des katalytischen Dieselpartikelfilters (20) umfasst:
- einen ersten Drucksensor (18) stromaufwärts des katalytischen Dieselpartikelfilters (20);
- einen zweiten Drucksensor (24) stromabwärts des katalytischen Dieselpartikelfilters (20); und
- ein elektronisches Steuergerät (42), um Signale von dem ersten und zweiten Drucksensor (18, 24) zu empfangen und basierend auf den empfangenen Signalen den Verunreinigungszustand des katalytischen Dieselpartikelfilters (20) zu bestimmen.

3. Abgasleitung nach Anspruch 2,
wobei der erste Drucksensor (18) nahe dem Einlass (21) des katalytischen Dieselpartikelfilters (20) angeordnet ist; und
wobei der zweite Drucksensor (24) nahe dem Auslass (21') des katalytischen Dieselpartikelfilters (20) angeordnet ist.

4. Abgasleitung nach Anspruch 2 oder 3, ferner umfassend einen Temperatursensor (26) stromabwärts des katalytischen Dieselpartikelfilters (20).

5. Abgasleitung nach irgendeinem der Ansprüche 1 bis 4, ferner umfassend einen Oxidationskatalysator (50) zwischen dem Abgasauslass (15) und dem katalytischen Dieselpartikelfilter (20).

6. Abgasleitung nach irgendeinem der Ansprüche 1 bis 5, wobei der Turbolader, der das elektrisch unterstützte Mittel umfasst, ein elektrisch unterstützter Turbolader ist.

7. Abgasleitung nach irgendeinem der Ansprüche 1 bis 5, wobei der Turbolader, der das elektrisch unterstützte Mittel umfasst, ein Turbolader ist, der mechanisch mit einem elektrisch unterstützten Verdichter verbunden ist.

8. Abgasleitung nach irgendeinem der vorangehenden Ansprüche, wobei das elektrisch unterstützte Mittel des Turboladers (32) von einer 12-V-Energiequelle gespeist wird.

9. Abgasleitung nach irgendeinem der vorangehenden Ansprüche, wobei ein Ladeluftkühler zwischen dem katalytischen Dieselpartikelfilter (20) und einem Lufteinlass des Motors (12) angeordnet ist.

10. Verfahren zur Reinigung des Abgases eines turboaufgeladenen Dieselmotors (10), der einen Turbolader (32) aufweist, der ein elektrisch unterstütztes Mittel umfasst, wobei das Verfahren die Schritte umfasst:
a) Leiten des Abgases durch einen katalytischen Dieselpartikelfilter (20);
b) Teilen des Abgasstroms in zwei Teile, wobei ein erster Teil davon von einer Position stromabwärts des katalytischen Dieselpartikelfilters (20) zu einer Abgasrückführungsleitung (36) geleitet wird und ein zweiter Teil des Abgases durch einen Turbolader (32) geleitet wird;
c) Bestimmen des Verunreinigungszustands des katalytischen Dieselpartikelfilters (20); und
d) abhängig von dem bestimmten Verunreinigungszustand des katalytischen Dieselpartikelfilters (20), Betreiben des Motors (10) in einer ersten Betriebsart, oder
in einer zweiten Betriebsart, bei der eine Temperatur des Abgases erhöht wird, um die im katalytischen Dieselpartikelfilter (20) eingefangenen Rußpartikel zu verbrennen.

11. Verfahren nach Anspruch 10, wobei der Schritt zum Bestimmen des Verunreinigungszustands des katalytischen Dieselpartikelfilters (20) die Schritte umfasst.
Messung eines ersten Drucks des Abgases stromaufwärts des katalytischen Dieselpartikelfilters (20) und eines zweiten Drucks des Abgases stromabwärts des katalytischen Dieselpartikelfilters (20); und
Berechnung einer Abgasdruckdifferenz quer über den katalytischen Dieselpartikelfilter (20) basierend auf dem gemessenen ersten und zweiten Druck.

12. Verfahren nach Anspruch 11, wobei
wenn die Abgasdruckdifferenz unter einem vorbestimmten Druckschwellenwert liegt, der Motor in der ersten Betriebsart läuft, und
wenn die Abgasdruckdifferenz über einem vorbestimmten Druckschwellenwert liegt, der Motor in der zweiten Betriebsart läuft.

13. Verfahren nach irgendeinem der Ansprüche 10 bis 12, wobei der Motor für einen vorbestimmten maximalen Zeitraum in der zweiten Betriebsart läuft, wobei der Motor danach in die erste Betriebsart umgeschaltet wird.

14. Verfahren nach irgendeinem der Ansprüche 10 bis 13, umfassend den Schritt zur Messung einer Temperatur des Abgases stromabwärts des katalytischen Dieselpartikelfilters (20),
wobei der Motor für eine Dauer unterhalb eines vorbestimmten maximalen Zeitraums in der zweiten Betriebsart läuft, wobei der Motor in die erste Betriebsart umgeschaltet wird, wenn die gemessene Temperatur einen vorbestimmten Temperaturschwellenwert erreicht, bevor der vorbestimmte maximale Zeitraum verstrichen ist.

15. Verfahren nach irgendeinem der Ansprüche 10 bis 14, wobei der Motor für eine Dauer unterhalb eines vorbestimmten maximalen Zeitraums in der zweiten Betriebsart läuft, wobei der Motor in die erste Betriebsart umgeschaltet wird, wenn die Abgasdruckdifferenz unter den vorbestimmten Druckschwellenwert sinkt, bevor der vorbestimmte maximale Zeitraum verstrichen ist.

16. Verfahren nach irgendeinem der Ansprüche 10 bis 15, wobei, in der zweiten Betriebsart, die Temperatur des Abgases erhöht wird durch
Vergrößerung des Abgasrückführungsstroms; und/oder
Verringerung der Ladedruckanforderung; und/oder
Vergrößerung der eingespritzten Kraftstoffmenge; und/oder
Verzögerung des Einspritzzeitpunkts.

17. Verfahren nach irgendeinem der Ansprüche 10 bis 16, ferner umfassend den Schritt zum Leiten des vom Motor (12) kommenden Abgases durch einen Oxidationskatalysator (50), bevor es dem katalytischen Dieselpartikelfilter (20) zugeführt wird.

## Revendications

1. Conduite de gaz d'échappement d'un moteur à combustion interne à cycle diesel suralimenté (10), ladite conduite d'échappement comprenant :
- une sortie de gaz d'échappement (15) ;
- une liaison pour alimenter des gaz d'échappement vers une conduite de recyclage de gaz d'échappement (36) ;
- un turbocompresseur (32) comprenant un moyen assisté électriquement ;
- un filtre à particules diesel catalysé (20) pourvu d'une entrée (21) et d'une sortie (21') ; et
- un moyen pour déterminer l'état de contamination dudit filtre à particules diesel catalysé (20),
dans lequel
ladite sortie de gaz d'échappement (15), ledit filtre à particules diesel catalysé (20), ladite liaison vers ladite conduite de recyclage de gaz d'échappement (36) et ledit turbocompresseur (32) sont connectés en série, dans cet ordre.

2. Conduite de gaz d'échappement selon la revendication 1, dans laquelle ledit moyen pour déterminer l'état de contamination dudit filtre à particules diesel catalysé (20) comprend
- un premier capteur de pression (18) en amont dudit filtre à particules diesel catalysé (20) ;
- un second capteur de pression (24) en aval dudit filtre à particules diesel catalysé (20) ;
- un module de commande électronique (42) recevant des signaux desdits premier et second capteurs de pression (18, 24) et déterminant, sur la base des signaux reçus, l'état de contamination dudit filtre à particules diesel catalysé (20).

3. Conduite de gaz d'échappement selon la revendication 2,
dans laquelle ledit premier capteur de pression (18) est situé à proximité de ladite entrée (21) dudit filtre à particules diesel catalysé (20) ; et
dans laquelle ledit second capteur de pression (24) est situé à proximité de ladite sortie (21') dudit filtre à particules diesel catalysé (20)

4. Conduite de gaz d'échappement selon la revendication 2 ou 3, comprenant, en outre, un capteur de température (26) en aval dudit filtre à particules diesel catalysé (20).

5. Conduite de gaz d'échappement selon l'une quelconque des revendications 1 à 4, comprenant, en outre, un catalyseur d'oxydation (50) entre ladite sortie de gaz d'échappement (15) et ledit filtre à particules diesel catalysé (20).

6. Conduite de gaz d'échappement selon l'une quelconque des revendications 1 à 5, dans laquelle ledit turbocompresseur comprenant un moyen assisté électriquement est un turbocompresseur assisté électriquement.

7. Conduite de gaz d'échappement selon l'une quelconque des revendications 1 à 5, dans laquelle ledit turbocompresseur comprenant un moyen assisté électriquement est un turbocompresseur relié mécaniquement à un compresseur assisté électriquement.

8. Conduite de gaz d'échappement selon l'une quelconque des revendications précédentes, dans laquelle ledit moyen assisté électriquement dudit turbocompresseur (32) est alimenté par une source de courant de 12 V.

9. Conduite de gaz d'échappement selon l'une quelconque des revendications précédentes, dans laquelle un refroidisseur d'air de suralimentation est situé entre ledit filtre à particules diesel catalysé (20) et une entrée d'air du moteur (12).

10. Procédé de purification des gaz d'échappement d'un moteur à combustion interne à cycle diesel suralimenté (10) pourvu d'un turbocompresseur (32) comprenant un moyen assisté électriquement, ledit procédé comprenant les étapes consistant à :
a) diriger lesdits gaz d'échappement à travers un filtre à particules diesel catalysé (20) ;
b) diviser ledit flux de gaz d'échappement en deux parties, une première partie étant dirigée d'un endroit en aval dudit filtre à particules diesel catalysé (20) vers une conduite de recyclage de gaz d'échappement (36), une seconde partie desdits gaz d'échappement étant dirigée à travers un turbocompresseur (32) ;
c) déterminer l'état de contamination dudit filtre à particules diesel catalysé (20) ; et
d) en fonction de l'état de contamination dudit filtre à particules diesel catalysé (20) qui a été déterminé, faire fonctionner ledit moteur (10)
dans un premier mode de fonctionnement ou
dans un second mode de fonctionnement dans lequel une température desdits gaz d'échappement est augmentée pour brûler les particules de suie piégées dans ledit filtre à particules diesel catalysé (20).

11. Procédé selon la revendication 10, dans lequel ladite étape de détermination de l'état de contamination dudit filtre à particules diesel catalysé (20) comprend les étapes consistant à :
mesurer une première pression desdits gaz d'échappement en amont dudit filtre à particules diesel catalysé (20) et une seconde pression desdits gaz d'échappement en aval dudit filtre à particules diesel catalysé (20) ; et
calculer une différence de pression de gaz d'échappement de part et d'autre dudit filtre à particules diesel catalysé (20) sur la base desdites première et seconde pressions mesurées.

12. Procédé selon la revendication 11, dans lequel,
lorsque ladite différence de pression de gaz d'échappement est inférieure à un seuil de pression prédéterminé, ledit moteur fonctionne dans ledit premier mode de fonctionnement et,
lorsque ladite différence de pression de gaz d'échappement est supérieure à un seuil de pression prédéterminé, ledit moteur fonctionne dans ledit second mode de fonctionnement.

13. Procédé selon l'une quelconque des revendications 10 à 12, dans lequel ledit moteur fonctionne dans ledit second mode de fonctionnement pendant une période de temps maximum prédéterminée, ledit moteur étant commuté ensuite dans ledit premier mode de fonctionnement.

14. Procédé selon l'une quelconque des revendications 10 à 13, comprenant l'étape de mesure d'une température desdits gaz d'échappement en aval dudit filtre à particules diesel catalysé (20),
dans lequel ledit moteur fonctionne dans ledit second mode de fonctionnement pendant une durée inférieure à une période de temps maximum prédéterminée, dans lequel ledit moteur est commuté dans ledit premier mode de fonctionnement lorsque ladite température mesurée atteint un seuil de température prédéterminé avant que ladite période de temps maximum prédéterminée soit écoulée.

15. Procédé selon l'une quelconque des revendications 10 à 14, dans lequel ledit moteur fonctionne dans ledit second mode de fonctionnement pendant une durée inférieure à une période de temps maximum prédéterminée, dans lequel ledit moteur est commuté dans ledit premier mode de fonctionnement lorsque ladite différence de pression de gaz d'échappement passe sous ledit seuil de pression prédéterminé avant que ladite période de temps maximum prédéterminée soit écoulée.

16. Procédé selon l'une quelconque des revendications 10 à 15, dans lequel, dans ledit second mode de fonctionnement, ladite température desdits gaz d'échappement est augmentée
en augmentant le flux de recyclage de gaz d'échappement ; et/ou
en diminuant la demande de pression de suralimentation ; et/ou
en augmentant la quantité de carburant injecté ; et/ou
en retardant le moment d'injection.

17. Procédé selon l'une quelconque des revendications 10 à 16, comprenant, en outre, l'étape consistant à diriger lesdits gaz d'échappement venant dudit moteur (12) à travers un catalyseur d'oxydation (50) avant de les alimenter dans ledit filtre à particules diesel catalysé (20).
